# EUROPEAN PATENT APPLICATION

(11) **EP 4 668 408 A1**
(43) Date of publication of application: **24.12.2025**
(21) Application number: 24839991.7
(22) Date of filing: 04.07.2024
(51) Int. Cl.: H01M 10/42, H01M 10/04, G01N 21/94

(54) **MONITORING SYSTEM, OPERATION METHOD THEREOF, AND FOREIGN SUBSTANCE FILTERING SYSTEM**

(30) Priority: 11.07.2023 KR 20230089716
(71) Applicant: LG Energy Solution, Ltd., Seoul 07335 (KR)
(72) Inventor: LEE, Sang Mu, Daejeon 34122 (KR); LEE, Yong Gu, Daejeon 34122 (KR); LEE, Joon Suk, Daejeon 34122 (KR); YU, Seung Yeon, Daejeon 34122 (KR); KIM, Guk Tae, Daejeon 34122 (KR)
(74) Representative: Goddar, Heinz J.
(86) International application number: PCT/KR2024/009457
(87) International publication number: WO 2025/014178

(57) **Abstract**

According to some embodiments disclosed herein, a monitoring system includes a filter configured to collect a foreign substance from a manufacturing component, a laser radiator configured to radiate a visible light laser to the foreign substance collected on a surface of the filter, an image sensor configured to generate a laser radiation image by photographing the foreign substance exposed to the visible light laser, and a processor configured to acquire detection information of the foreign substance detected from the manufacturing component by performing image processing on the laser radiation image.

## Description

### [TECHNICAL FIELD]

### CROSS-REFERENCE TO RELATED APPLICATION

This application claims priority to and the benefit of Korean Patent Application No. 10-2023-0089716 filed in the Korean Intellectual Property Office on July 11, 2023, the entire contents of which are incorporated herein by reference.

### TECHNICAL FIELD

Embodiments disclosed herein relate to a monitoring system, an operating method of the monitoring system, and a foreign substance filtering system.

### [BACKGROUND ART]

Recently, research and development on secondary batteries has been actively conducted. Here, the secondary battery is a battery capable of charging and discharging and may be construed as including all recent lithium ion batteries such as conventional Ni/Cd batteries and Ni/MH batteries. Among secondary batteries, lithium ion batteries may have a higher energy density than conventional Ni/Cd batteries, Ni/MH batteries, etc. and may be manufactured in a compact and lightweight manner, and thus may have high usability in terms of power sources for mobile devices. Recently, the lithium-ion batteries are attracting attention as a next-generation energy storage medium as a range of use expands to a power source for an electric vehicle.

When a foreign substance is mixed in a manufacturing process of the secondary battery, the lifetime or performance of the secondary battery may be lowered. For example, when a metallic foreign substance is introduced together with a semi-finished electrode, a low-voltage defect may occur in a battery cell, and thus a process of removing the metallic foreign substance using a magnetic filter may be separately performed. Meanwhile, to properly perform quality control for a foreign substance, it is necessary to monitor the foreign substance in real time in the manufacturing process.

### [DISCLOSURE]

### [TECHNICAL PROBLEM]

Embodiments disclosed herein are directed to providing a monitoring system capable of monitoring detection of a foreign substance in a manufacturing process, an operating method of the monitoring system, and a foreign substance filtering system.

The technical objects of embodiments disclosed herein are not limited to the above-described objects, and other objects that are not described will be able to be clearly understood by those skilled in the art from the following descriptions.

### [TECHNICAL SOLUTION]

According to some embodiments disclosed herein, a monitoring system includes a filter configured to collect a foreign substance from a manufacturing component, a laser radiator configured to radiate a visible light laser to the foreign substance collected on a surface of the filter, an image sensor configured to generate a laser radiation image by photographing the foreign substance exposed to the visible light laser, and a processor configured to acquire detection information of the foreign substance detected from the manufacturing component by performing image processing on the laser radiation image.

According to some embodiments, the processor is configured to generate a noise processed image by performing noise processing on the laser radiation image, and perform adaptive thresholding on the noise processed image to acquire the detection information.

According to some embodiments, the processor is configured to partition the noise processed image into a plurality of blocks and calculate an adaptive threshold value of each block, binarize brightness values of pixels of each block based on the adaptive threshold value and calculate binarized brightness values, and acquire the detection information based on the binarized brightness values.

According to some embodiments, the processor is configured to calculate a weighted average of the brightness values of the pixels of each block, calculate a threshold value correction constant based on a difference between a maximum brightness value and a minimum brightness value of each block, and calculate the adaptive threshold value by applying the threshold value correction constant to the weighted average.

According to some embodiments, the processor is configured to determine the number of excluded pixels (m) based on a first quartile (Q1), a third quartile (Q3), and an interquartile range (IQR) of the brightness values of the pixels of each block, and calculate the threshold value correction constant based on a difference between the maximum brightness value and the minimum brightness value with respect to the remaining pixels excluding m pixels with upper level brightness values and m pixels with lower level brightness values among the pixels of each block.

According to some embodiments, the processor is configured to generate a first direction Sobel filter image and a second direction Sobel filter image by applying a Sobel filter in a first direction and a second direction perpendicular to the first direction with respect to the laser radiation image, and generate the noise processed image by calculating an average of the first direction Sobel filter image and the second direction Sobel filter image.

According to some embodiments, the detection information includes at least one of a detection amount and size of the foreign substance detected from the manufacturing component, and the processor is further configured to predict a defect rate of the manufacturing component based on the detection information.

According to some embodiments, the manufacturing component includes a battery electrode, the foreign substance collected on a surface of the filter includes a metallic foreign substance, the filter includes a magnetic bar filter configured to collect the metallic foreign substance, and the visible light laser includes a green light line beam laser having a wavelength range including a wavelength of 532 nm.

According to some embodiments disclosed herein, an operating method of a monitoring system includes collecting a foreign substance from a manufacturing component through a filter, radiating a visible light laser to the foreign substance collected on a surface of the filter through a laser radiator, generating a laser radiation image by photographing the foreign substance exposed to the visible light laser through an image sensor, and acquiring detection information of the foreign substance detected from the manufacturing component by performing image processing on the laser radiation image.

According to some embodiments, the acquiring of the detection information includes generating a noise processed image by performing noise processing on the laser radiation image, and performing adaptive thresholding on the noise processed image to acquire the detection information.

According to some embodiments, the performing of the adaptive thresholding includes partitioning the noise processed image into a plurality of blocks and calculating an adaptive threshold value of each block, binarizing brightness values of pixels of each block based on the adaptive threshold value and calculating binarized brightness values, and acquiring the detection information based on the binarization brightness values.

According to some embodiments, the calculating of the adaptive threshold value includes calculating a weighted average of the brightness values of the pixels of each block, calculating a threshold value correction constant based on a difference between a maximum brightness value and a minimum brightness value of each block, and calculating the adaptive threshold value by applying the threshold value correction constant to the weighted average.

According to some embodiments, the calculating of the threshold value correction constant includes determining the number of excluded pixels (m) based on a first quartile (Q1), a third quartile (Q3), and an interquartile range (IQR) of the brightness values of the pixels of each block, and calculating the threshold value correction constant based on a difference between the maximum brightness value and the minimum brightness value with respect to the remaining pixels excluding m pixels with upper level brightness values and m pixels with lower level brightness values among the pixels of each block.

According to some embodiments, the generating of the noise processed image includes generating a first direction Sobel filter image and a second direction Sobel filter image by applying a Sobel filter in a first direction and a second direction perpendicular to the first direction with respect to the laser radiation image, and generating the noise processed image by calculating an average of the first direction Sobel filter image and the second direction Sobel filter image.

According to some embodiments, the detection information includes at least one of a detection amount and size of the foreign substance detected from the manufacturing component, and the operating method further includes predicting a defect rate of the manufacturing component based on the detection information through the processor.

According to some embodiments, the manufacturing component includes a battery electrode, the foreign substance collected on a surface of the filter includes a metallic foreign substance, the filter includes a magnetic bar filter configured to collect the metallic foreign substance, and the visible light laser includes a green light line beam laser having a wavelength range including a wavelength of 532 nm.

According to some embodiments disclosed herein, a foreign substance filtering system includes a transport system configured to transport a manufacturing component, and a monitoring system configured to filter a foreign substance from the manufacturing component and monitor detection information of the foreign substance, wherein the monitoring system includes a filter configured to collect the foreign substance from the manufacturing component, a laser radiator configured to radiate a visible light laser to the foreign substance collected on a surface of the filter, an image sensor configured to generate a laser radiation image by photographing the foreign substance exposed to the visible light laser, and a processor configured to acquire detection information of the foreign substance detected from the manufacturing component by performing image processing on the laser radiation image.

### [ADVANTAGEOUS EFFECTS]

According to the embodiments disclosed herein, there may be provided the monitoring system capable of monitoring the detection of the foreign substance in the manufacturing process, the operating method of the monitoring system, and the foreign substance filtering system.

The technical effects according to the embodiments disclosed herein are not limited to the above-described effects, and other effects that are not described will be able to be clearly understood by those skilled in the art according to the disclosure of the present document.

### [DESCRIPTION OF DRAWINGS]

FIGS. 1A and 1B are views showing a foreign substance filtering system for filtering a foreign substance from manufacturing components and monitoring detection information of the foreign substance according to some embodiments disclosed herein.
FIG. 2 is a view showing components constituting a monitoring system according to some embodiments disclosed herein.
FIG. 3 is a view showing a process of generating a laser radiation image by photographing a foreign substance exposed to a visible light laser according to some embodiments disclosed herein.
FIG. 4 is a view showing noise processing performed on the laser radiation image according to some embodiments disclosed herein.
FIG. 5 is a view showing a process of calculating an average of a first direction Sobel filter image and a second direction Sobel filter image according to some embodiments disclosed herein.
FIG. 6 is a view showing adaptive thresholding performed on a noise processed image according to some embodiments disclosed herein.
FIG. 7 is a view showing binarized images according to parameters of the adaptive thresholding according to some embodiments disclosed herein.
FIG. 8 is a view showing a process of calculating a threshold value correction constant according to some embodiments disclosed herein.
FIG. 9 is a view showing a process of calculating binarized brightness values based on an adaptive threshold value according to some embodiments disclosed herein.
FIG. 10 is a view showing operations constituting an operating method of the monitoring system according to some embodiments disclosed herein.

### [MODE FOR INVENTION]

Hereinafter, embodiments disclosed herein will be described with reference to the accompanying drawings. However, it should be understood that this is not intended to limit the disclosure of the present document to specific embodiments and includes various modifications, equivalents, and/or alternatives of the embodiments described herein.

It should be understood that the embodiments of the present document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. Terms such as "1^{st}," "2^{nd}," "first," "second," "A," "B," "(a)," or "(b)" may simply be used to distinguish the corresponding component from another and do not limit the corresponding components in another aspect (e.g., importance or order), unless mentioned otherwise.

When a certain (e.g., a first) component is described as being "coupled wit h," "connected with," or "joined with," or "coupled" or "connected" to another (e.g., a second) component with or without the terms "functionally" or "communicatively," this means that the certain component may be connected to another component directly (e.g., in a wired or wireless manner) or indirectly (e.g., through a third component).

A method according to various embodiments disclosed herein may be provided by being included in a computer program product. The computer program product may be traded between sellers and buyers as commodities. The computer program product may be distributed in the form of a device-readable storage medium (e.g., a compact disc read only memory (CD-ROM)) or online distributed (e.g., downloaded or uploaded) through application stores or directly between two user devices. In the case of the online distribution, at least some of the computer program products may be at least temporarily stored or temporarily generated in a device-readable storage medium such as a memory of a server of a manufacturer, a server of an application store, or a relay server.

According to the embodiments disclosed herein, each component (e.g., a module or program) of the above-described components may include a single object or a plurality of objects, and some of the plurality of objects may be separately disposed in another component. According to the embodiments disclosed herein, one or more of the above-described corresponding components or operations may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to the embodiments disclosed herein, operations performed by modules, programs, or other components may be executed sequentially, in parallel, repeatedly, or heuristically, or one or more of the operations may be executed in a different order or omitted, or one or more other operations may be added.

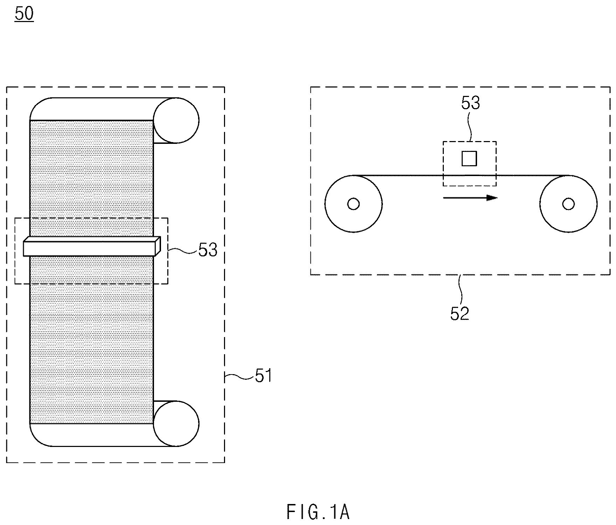

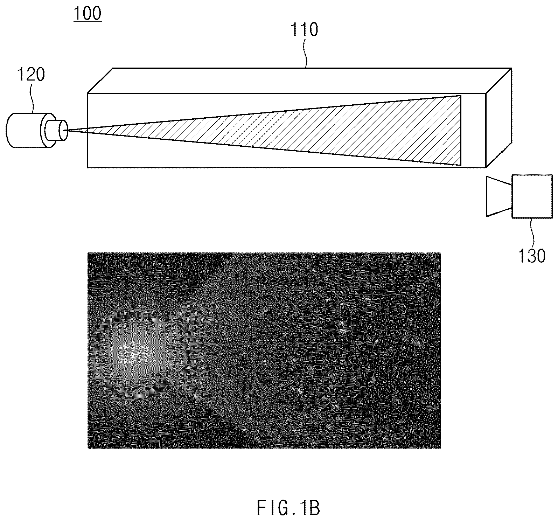

FIGS. 1A and 1B are views showing a foreign substance filtering system for filtering a foreign substance from manufacturing components and monitoring detection information of the foreign substance according to some embodiments disclosed herein.

Referring to FIG. 1A, a foreign substance filtering system 10 may include a transport system 50 configured to transport manufacturing components, and referring to FIG. 1B, the foreign substance filtering system 10 may include a monitoring system 100 configured to filter a foreign substance from manufacturing components and monitor detection information of the foreign substance. However, the present disclosure is not limited thereto, and some components may be omitted from the foreign substance filtering system 10, or other general-purpose components may be further included in the foreign substance filtering system 10.

The transport system 50 may have an exemplary structure as shown in a front view 51 and a side view 52 and transport manufacturing components through filters 53 and 110 to be monitored by the monitoring system 100. According to an embodiment, the transport system 50 may include a roll-shaped conveyor. When the manufacturing component is a semi-finished battery electrode product constituting a battery cell, the transport system 50 may be an electrode roll, and the manufacturing component may be a semi-finished product or battery raw material other than the battery electrode.

The monitoring system 100 may filter a foreign substance of the manufacturing component transported by the transport system 50 through a laser radiator 120 and an image sensor 130 and acquire detection information of the filtered foreign substance. According to an embodiment, the detection information of the foreign substance may include the detection amount of the foreign substance and/or the size of the foreign substance. According to an embodiment, the monitoring system 100 may include a laser radiator and image sensor for detecting a metallic foreign substance attached to a magnetic bar filter.

Since information about the size and amount of the foreign substance may be acquired through the monitoring system 100, based on the same, the quality level of the manufacturing component may be determined. In addition, a defect rate of a finished product manufactured from the manufacturing component may be predicted based on the foreign substance information. According to an embodiment, when the manufacturing component is a semi-finished electrode product and the manufactured finished product is a battery cell, the probability of a low-voltage defect occurring in the battery cell may be estimated based on the size and amount of the foreign substance detected in the semi-finished electrode product.

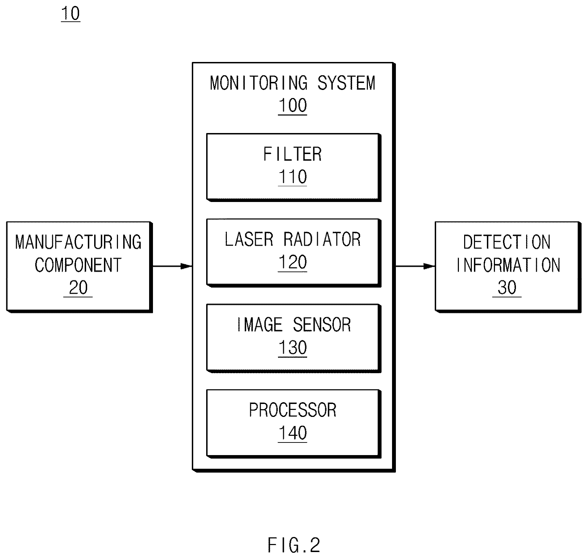

FIG. 2 is a view showing components constituting a monitoring system according to some embodiments disclosed herein.

Referring to FIG. 2, the monitoring system 100 may include a filter 110, the laser radiator 120, the image sensor 130, and a processor 140. However, the present disclosure is not limited thereto, and some components may be omitted from the monitoring system 100, or other general-purpose components may be further included in the monitoring system 100.

The monitoring system 100 may filter a foreign substance from a manufacturing component 20 and calculate detection information 30 of the foreign substance detected from the manufacturing component 20. According to an embodiment, the manufacturing component 20 may include a semi-finished electrode product used to manufacture a finished battery cell product, and the foreign substance detected from the manufacturing component 20 may include a metallic foreign substance.

The filter 110 may be configured to collect the foreign substance from the manufacturing component 20. According to an embodiment, the filter 110 may include a magnetic bar filter configured to collect the metallic foreign substance. Alternatively, the filter 110 may have a structure for removing various types of foreign substances that may be introduced in a battery manufacturing process.

The laser radiator 120 may be configured to radiate a visible light laser to a foreign substance collected on a surface of the filter 110. According to an embodiment, the laser radiator 120 may include a green light line beam laser. A wavelength range of the laser radiator 120 may be a green light range including a wavelength of 532 nm. The laser radiator 120 may include a line beam laser that is a laser radiated in the form of a line beam having a specific width. Alternatively, the laser radiator 120 may include a point laser that is a laser radiated to a point-shaped area and may be configured in a combination of various shapes such as lines or dots. According to an embodiment, the laser radiator 120 may have a size of 16x65 mm, power of 20 mW, an output aperture of Φ5 mm, a line thickness of 1 mm or less at a distance of 1 m, a line thickness of 3 mm or less at a distance of 10 m, and an adjustable focus.

The image sensor 130 may be configured to generate a laser radiation image by photographing the foreign substance exposed to the visible light laser. When the visible light laser is radiated to the foreign substance attached to the filter 110, the size and amount of the foreign substance can be more easily identified. According to an embodiment, the image sensor 130 may include a line scan camera with a 4 k (4096) resolution. The image sensor 130 may have a production capacity of 30 PPM (60 M/min), a lens of 12 mm+ext0.5, a field of view (FOV) of 120 mm, and a resolution of 30 µm.

The processor 140 may be configured to calculate detection information 30 of the foreign substance detected from the manufacturing component 20 by performing image processing on the laser radiation image. According to an embodiment, the foreign substance detection information 30 may include at least one of the detection amount and size of the foreign substance detected from the manufacturing component 20.

According to an embodiment, the image processing on the laser radiation image may include noise processing and adaptive thresholding processing, and the adaptive thresholding processing may include processing that partitions a target image into a plurality of blocks, processing that calculates an adaptive threshold value for each of the plurality of blocks. When the image processing is performed on the laser radiation image, the amount and size of the foreign substance detected from the manufacturing component 20 may be analyzed.

The processor 140 may have a structure for executing commands that implement processes processed inside the monitoring system 100. The processor 140 may be implemented as an array of a plurality of logic gates or general-purpose microprocessor for processing various operations and configured as a single processor or a plurality of processors. For example, the processor 140 may be implemented in the form of a microprocessor, a CPU, a GPU, an AP, or a combination thereof.

The processor 140 may be configured separately or integrally with a memory (not shown) configured to store commands and may process various calculations by executing the commands stored in the memory. The memory may store various pieces of data, commands, mobile applications, computer programs, etc. For example, the memory interworked with the processor 140 may be implemented as a non-volatile memory such as a ROM, a PROM, an EPROM, an EEPROM, a flash memory, a PRAM, an MRAM, a RRAM, or an FRAM, or a volatile memory such as a DRAM, an SRAM, an SDRAM, a PRAM, a RRAM, or an FeRAM, and implemented in the form of an HDD, an SSD, an SD, a Micro-SD, or a combination thereof.

According to an embodiment, the processor 140 may be further configured to predict a defect rate of the manufacturing component 20 based on the detection information 30. For example, the detection information 30 may include information about the number of foreign substances in the manufacturing component 20 and information about the size of each foreign substance, and the defect rate of the manufacturing component 20 may be predicted based on the number of foreign substances and the size of each foreign substance. According to an embodiment, the defect rate of the manufacturing component 20 may be predicted based on the number of foreign substances having a size exceeding a critical size.

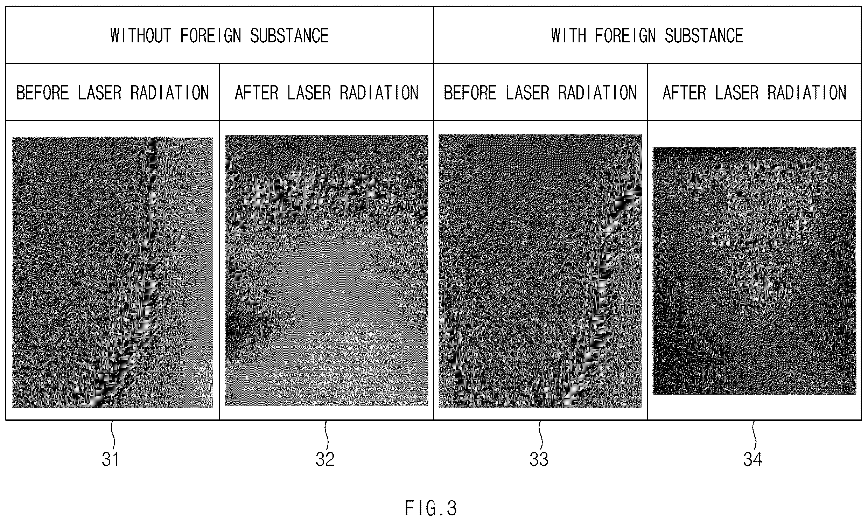

FIG. 3 is a view showing a process of generating a laser radiation image by photographing a foreign substance exposed to a visible light laser according to some embodiments disclosed herein.

Referring to FIG. 3, a first captured image 31, a second captured image 32, a third captured image 33, and a fourth captured image 34 that are generated by the image sensor 130 for photographing the foreign substance exposed to the visible light laser may be shown.

The first captured image 31 and the second captured image 32 may be images when no foreign substance is present on the surface of the filter 110, and the third captured image 33 and the fourth captured image 34 may be images when the foreign substance is present on the surface of the filter 110. The first captured image 31 and the third captured image 33 may be images when no visible light laser is radiated, and the second captured image 32 and the fourth captured image 34 may be images when the visible light laser is radiated.

When comparing before and after the radiation of the visible light laser, the foreign substance attached to the surface of the filter 110 can be more clearly identified when exposed by the visible light laser. In particular, when comparing the third captured image 33 with the fourth captured image 34, a foreign substance can be more clearly detected by the image sensor 130 when a green light laser is radiated.

In the case of the fourth captured image 34, it can be confirmed that the shade and brightness are different for each area of the image. Therefore, when identifying a portion of the fourth captured image 34 on which a foreign substance is present, it may be necessary to determine whether the foreign substance is present based on different references for each area. To this end, instead of analyzing the entire fourth captured image 34 using one reference value, adaptive analysis that partitions the fourth captured image 34 into a plurality of blocks and analyzes each block using a different reference value is performed.

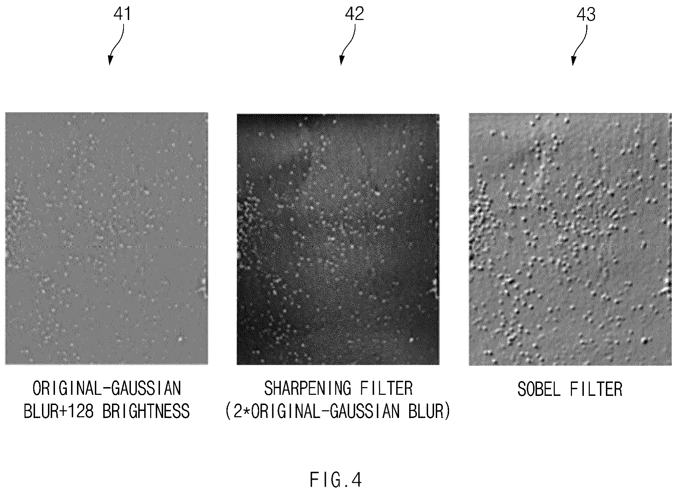

FIG. 4 is a view showing noise processing performed on the laser radiation image according to some embodiments disclosed herein.

Referring to FIG. 4, first noise processing 41, second noise processing 42, and third noise processing 43 may be shown in relation to the noise processing performed on the laser radiation image.

According to an embodiment, the processor 140 may be configured to generate the noise processed image by performing the noise processing on a laser radiation image and perform the adaptive thresholding on the noise-processed image to acquire detection information. According to an embodiment, the noise processing on the laser radiation image may be at least one of the first noise processing 41, the second noise processing 42, and the third noise processing 43. According to an embodiment, the adaptive thresholding may mean performing thresholding processing for the noise processed image on image areas using different references.

The first noise processing 41 may be processing that adds 128 brightness after subtracting Gaussian Blur from the original laser radiation image, the second noise processing 42 may be processing that subtracts Gaussian Blur after multiplying an original brightness of the laser radiation image by 2, and the third noise processing 43 may be processing that applies a Sobel filter to the original laser radiation image.

Among the exemplified first noise processing 41, second noise processing 42, and third noise processing 43, a noise processing method that best distinguishes an area in which a foreign substance is present from an area in which the foreign substance is not present may be used. Meanwhile, various noise processing methods in addition to the exemplified processing methods may be used, and a processing method with the highest performance may vary depending on the type (e.g., a semi-finished battery electrode product) of the manufacturing component 20 and the type (e.g., a metallic foreign substance) of a foreign substance.

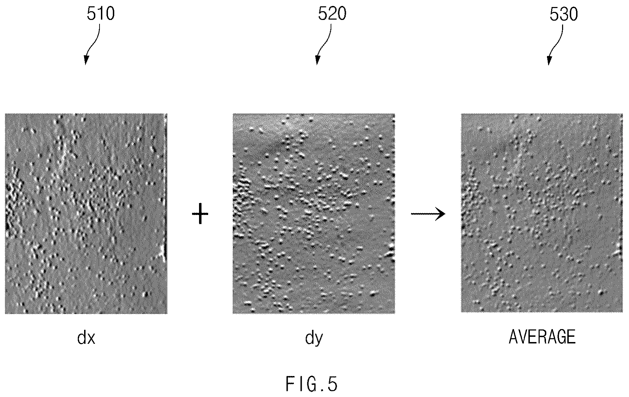

FIG. 5 is a view showing a process of calculating an average of a first direction Sobel filter image and a second direction Sobel filter image according to some embodiments disclosed herein.

Referring to FIG. 5, a process of calculating an average 530 of a first direction Sobel filter image 510 and a second direction Sobel filter image 520 may be shown. According to an embodiment, the Sobel filter for the laser radiation image may be applied in a first direction and a second direction perpendicular to each other.

According to an embodiment, the processor 140 may be configured to generate the first direction Sobel filter image 510 and the second direction Sobel filter image 520 by applying a Sobel filter to the laser radiation image in the first direction or the second direction perpendicular to the first direction and generate the noise processed image by calculating the average 530 of the first direction Sobel filter image 510 and the second direction Sobel filter image 520.

According to an embodiment, the Sobel filter may use a differentiation method to find an area in which a brightness value of a pixel changes rapidly. As in the case of the fourth captured image 34, since the laser radiation image may include a shade caused by the visible light laser radiated from a side surface of the filter 110, a Sobel filter that detects a portion with high fine changes dx and dy in brightness value may be suitable for noise processing. Here, a final noise processed image may be derived as the average 530 of the first direction Sobel filter image 510 in an x direction and the second direction Sobel filter image 520 in a y direction.

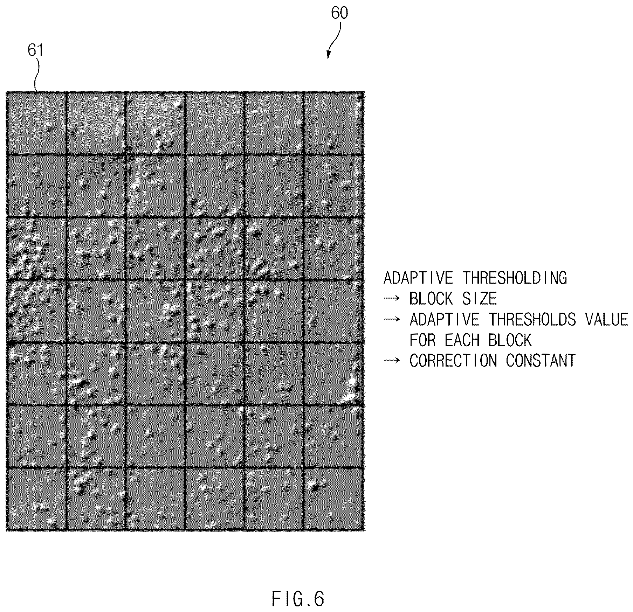

FIG. 6 is a view showing adaptive thresholding performed on a noise processed image according to some embodiments disclosed herein.

Referring to FIG. 6, for the adaptive thresholding on a noise processed image 60, determination of the block size, calculation of an adaptive threshold value for each of a plurality of blocks, and application of a correction constant to the adaptive threshold value are performed.

According to an embodiment, the processor 140 may be configured to partition the noise processed image 60 into a plurality of blocks, calculate an adaptive threshold value for each block, calculate binarized brightness values by binarizing brightness values of pixels of each block, and acquire detection information based on the binarized brightness values. For example, as shown, the noise processed image 60 may be partitioned into 42 blocks, and 42 adaptive threshold values respectively corresponding to the 42 blocks may be calculated. Binarization may be performed on the pixels of each block based on each adaptive threshold value.

According to an embodiment, when the adaptive thresholding is performed on each block, the brightness values of the pixels constituting each block may be changed to any one of two values. For example, a first block 61 of the noise processed image 60 may include 5*5 pixels, each pixel may have a brightness value of any one of 0 to 255, and when an adaptive threshold value for the first block 61 is 128, brightness values of pixels with a brightness value smaller than 128 among the 5*5 pixels may be set to a first binary value, and brightness values of pixels with a brightness value greater than or equal to 128 among the 5*5 pixels may be set to a second binary value.

According to an embodiment, the adaptive threshold value for the first block 61 may be calculated as an arithmetic average or weighted average of the 5*5 pixels. In the case of the weighted average, 5*5 weights may be derived based on the brightness values of the 5*5 pixels, and the weighted average may be calculated based on the weights. According to an embodiment, when the adaptive threshold value for the first block is 128, the first binary value may be set to any one value of 0 to 127, and the second binary value may be set to any one value of 128 to 255. Preferably, the first binary value may be 0, and the second binary value may be 128 or 255.

When partitioning the noise processed image 60 into a plurality of blocks, the size of each block may not be limited to 5*5. For example, a block size such as 3*3, 5*5, 7*7, or 9*9 may be used, the number of horizontal pixels and the number of vertical pixels of the block may be different, and the number of horizontal pixels and the number of vertical pixels of the block may be odd.

A correction constant for the plurality of blocks of the noise processed image 60 may be calculated. For example, when the adaptive threshold value for the first block 61 is 128 and the correction constant for the plurality of blocks of the noise processed image 60 is -8, the adaptive threshold value for the first block 61 may be finally adjusted to 120.

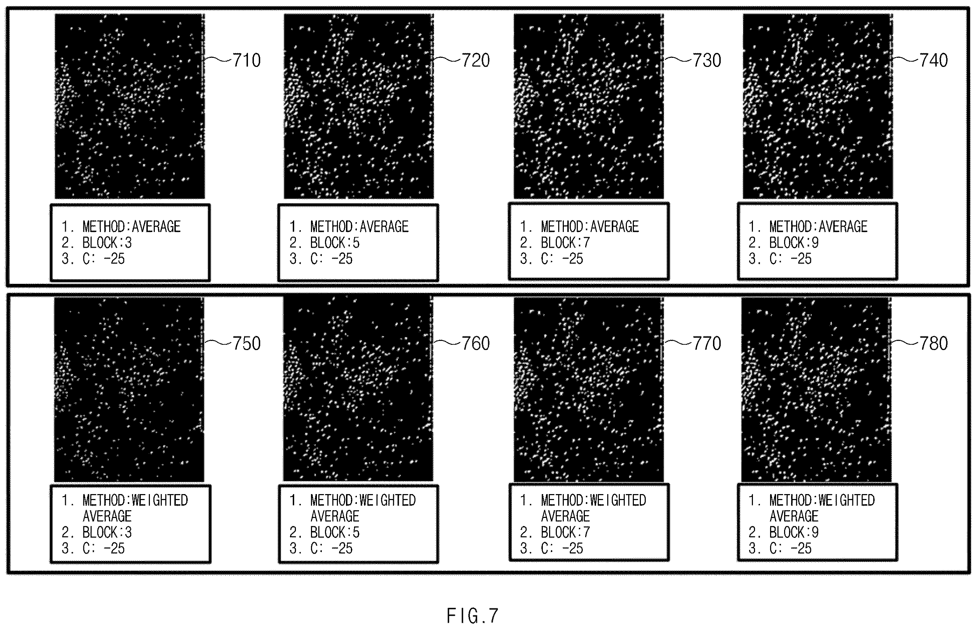

FIG. 7 is a view showing binarized images according to parameters of the adaptive thresholding according to some embodiments disclosed herein.

Referring to FIG. 7, a first binarized image 710 to an eighth binarized image 780 according to the parameters of the adaptive thresholding may be shown. The parameters of the adaptive thresholding may include threshold value calculation methods (average, weighted), block sizes (3, 5, 7, 9), and a correction constant (C).

According to an embodiment, the processor 140 may be configured to calculate a weighted average of the brightness values of the pixels of each block, calculate a threshold value correction constant based on a difference between a maximum brightness value and a minimum brightness value of each block, and calculate an adaptive threshold value by applying the threshold value correction constant to the weighted average. For example, when the weighted average for the first block among the plurality of blocks is 128 and the correction constant for the plurality of blocks is -8, the adaptive threshold value for the first block may be calculated as 120.

The first binarized image 710 to the fourth binarized image 740 may represent a case where the threshold calculation method is the arithmetic average of the brightness values of the pixels of each block, and the fifth binarized image 750 to the eighth binarized image 780 may represent a case where the threshold calculation method is the weighted average of the brightness values of the pixels of each block. While the arithmetic average may have a low computational amount and a fast processing speed, the weighted average may have high foreign substance selection ability.

The first binarized image 710 to the eighth binarized image 780 may have different block sizes (3, 5, 7, 9). While the smaller the block size, the more detailed binarization is possible, the larger the block size, the lower the amount of calculation and faster processing speed. Like the first binarized image 710 to the eighth binarized image 780, when the parameters of the adaptive thresholding are changed, the binarized images may be also changed. Therefore, the parameters of the binarization that are most suitable for the combination of the type (e.g., a semi-finished battery electrode product) of the manufacturing component 20 and the type (e.g., a metallic foreign substance) of the foreign substance may be selected.

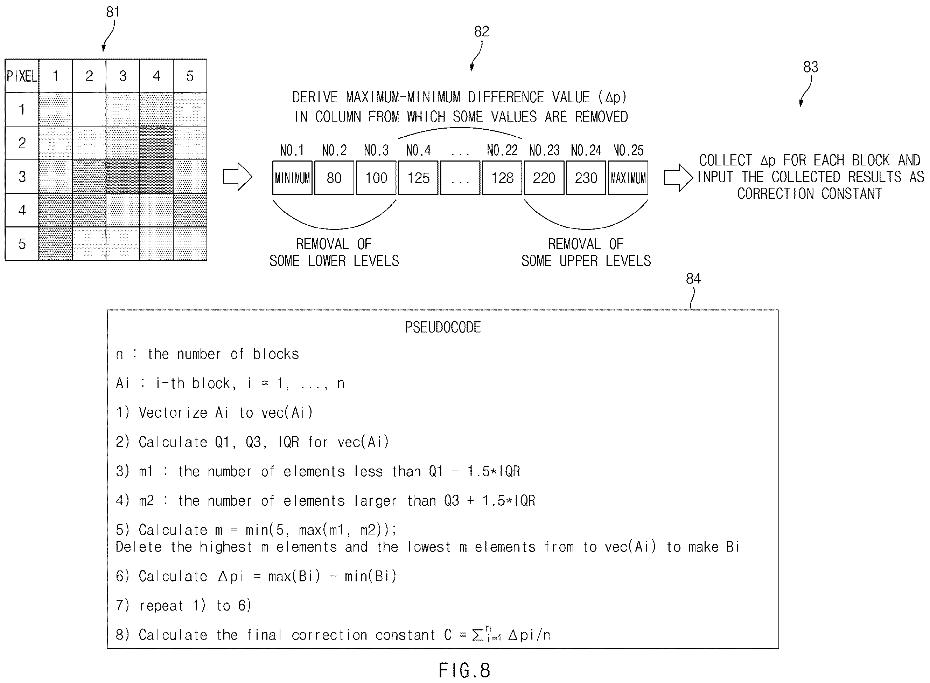

FIG. 8 is a view showing a process of calculating a threshold value correction constant according to some embodiments disclosed herein.

Referring to FIG. 8, with regard to the process of calculating the threshold value correction constant, a first process 81 of reading the brightness values of the pixels of each block, a second process 82 of excluding some upper level pixels and some lower level pixels among the pixels of each block, a third process 83 of determining a correction constant by averaging brightness differences Δp of the remaining pixels excluding the some upper level and lower level pixels with respect to all blocks, and a pseudocode 84 representing the first process 81 to the third process 83 may be shown.

As in the example of the first process 81, each block may include 5*5 pixels with 5*5 brightness values. As in the example of the second process 82, 3 lower level pixels and 3 upper level pixels among the 5*5 pixels may be excluded, and as in the example of the third process 83, a difference Δp between the highest brightness value (e.g., 128 of a 22^{th} pixel shown) and the lowest brightness value (e.g., 125 of a fourth pixel shown) among the brightness values of 19 pixels from which 6 pixels are excluded may be calculated as 3. The correction constant C may be calculated by averaging the Δp of each block with respect to all blocks.

According to an embodiment, the processor 140 may be configured to determine the number of excluded pixels (m) based on a first quartile Q1, a third quartile Q3, and an interquartile range (IQR) of the brightness values of the pixels of each block and calculate a threshold value correction constant based on the difference between the maximum brightness value and the minimum brightness value with respect to the remaining pixels excluding m pixels with upper level brightness values and m pixels with lower level brightness values among the pixels of each block.

How many pixels among the pixels of each block are excluded may be determined based on the first quartile Q1, the third quartile Q3, and the interquartile range IQR of the brightness values of the pixels of each block. As in the example in the pseudocode 84, the number of excluded pixels (m) may be calculated as m = min(5, max(Q1 - 1.5 * IQR, Q3 + 1.5 * IQR)), in which 5 may be determined based on the block size (5*5 in this example).

When the number of excluded pixels (m) is set too large, too many elements are removed from a vectorized block vec(Ai), and thus for the block size of 5*5, it may be recommended that the number of excluded pixels (m) be 5 or less. According to an embodiment, when the block size is x*x, the upper limit of the number of excluded pixels (m) may be set to x. When the number of excluded pixels (m) is determined, m upper level pixels and m lower level pixels may be excluded based on the brightness value among the pixels of each block, a difference Δpi between a maximum brightness value max(Bi) and a minimum brightness value min(Bi) among the brightness values of the remaining pixels may be calculated, Δpi for all n blocks may be calculated, and an average thereof may be calculated as a final correction constant.

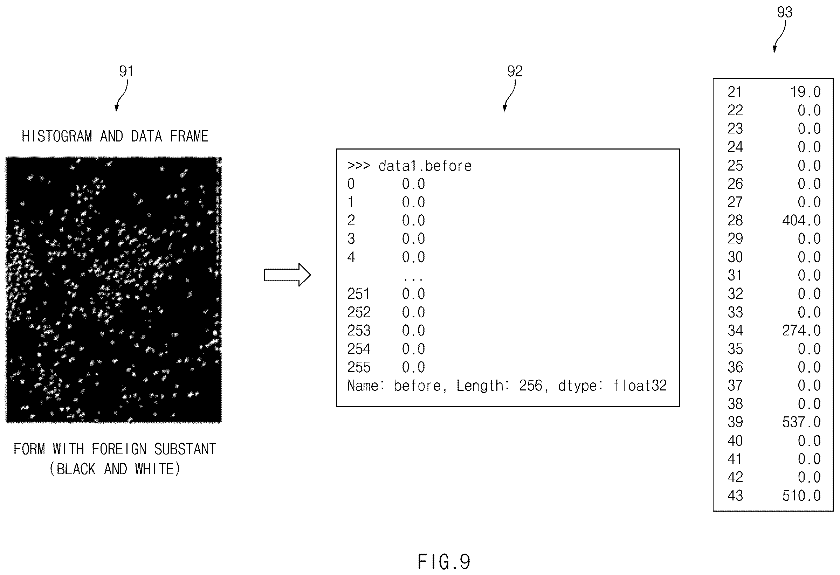

FIG. 9 is a view showing a process of calculating binarized brightness values based on an adaptive threshold value according to some embodiments disclosed herein.

Referring to FIG. 9, a process of extracting binarized brightness values 92 from a binarized image 91 and a process of extracting data 93 representing the number of pixels with each brightness value of 0 to 255 among the binarized brightness values 92 may be shown.

As in the example of the data 93, among the brightness values of 0 to 255, the number of pixels with the brightness value of 21 may be 19, the number of pixels with the brightness value of 28 may be 404, and the number of pixels with the brightness value of 34 may be 274. Here, brightness values of 21, 28, 34, 39, 43, etc. may be any one of the first binary value and the second binary value of the adaptive thresholding applied to the plurality of blocks.

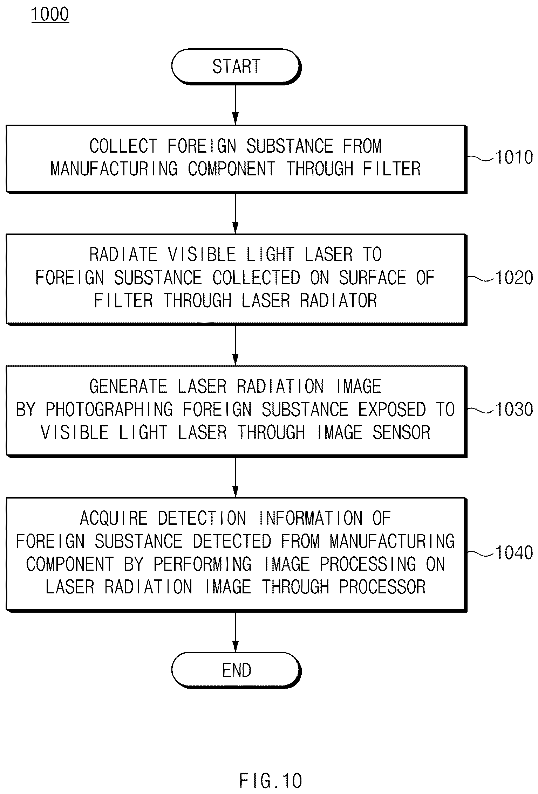

FIG. 10 is a view showing operations constituting an operating method of the monitoring system according to some embodiments disclosed herein.

FIG. 10 is a view showing operations constituting an operating method 1000 of the monitoring system 100 according to some embodiments disclosed herein.

Referring to FIG. 10, the operating method 1000 of the monitoring system 100 may include operations 1010 to 1040. However, the present disclosure is not limited thereto, and some operations may be omitted or general-purpose operations may be added, and operations of the operating method 1000 of the monitoring system 100 may be executed in a different order from the shown order.

Operations 1010 to 1040 of the operating method 1000 of the monitoring system 100 may be performed by the monitoring system 100. According to an embodiment, the operating method 1000 may include operations performed in time series by the monitoring system 100. Therefore, even when contents are omitted below, the above-described contents for the monitoring system 100 may be applied to a battery operating method 1000 in the same manner.

In operation 1010, the monitoring system 100 may collect a foreign substance from a manufacturing component through a filter.

In operation 1020, the monitoring system 100 may radiate a visible light laser to the foreign substance collected on a surface of the filter through a laser radiator.

In operation 1030, the monitoring system 100 may generate a laser radiation image by photographing the foreign substance exposed to the visible light laser through an image sensor.

In operation 1040, the monitoring system 100 may acquire detection information of a foreign substance detected from the manufacturing component by performing image processing on the laser radiation image through a processor.

According to an embodiment, the operating method 1000 of the monitoring system 100 may be implemented in the form of a computer program stored in a computer-readable storage medium. That is, the computer program may include commands for implementing the operating method 1000 of the monitoring system 100, and the commands of the program may be stored in the computer-readable storage medium. The computer program may include a mobile application.

For example, the computer-readable recording medium may include magnetic media such as a hard disk, a floppy disk, and a magnetic tape, optical media such as a CD-ROM and a DVD, and magneto-optical media such as a floptical disk, and hardware devices specifically configured to store and execute program commands, such as a ROM, a RAM, and a flash memory. The computer program commands may include machine language code generated by a compiler and high-level language code that may be executed by a computer using an interpreter, etc.

The terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the present disclosure without departing from the essential characteristics of the embodiments disclosed herein. Therefore, the embodiments disclosed herein are not intended to limit the technical spirit disclosed herein, but for illustrative purpose, and the scope of the technical spirit disclosed herein is not limited by these embodiments. The scope of the technical spirit disclosed herein should be construed by the appended claims, and all technical spirits within the equivalent range should be construed as being included in the scope of the present document.

### [DESCRIPTION OF REFERENCE NUMERALS]

| | | | |
|---|---|---|---|
| 10: | foreign substance filtering system | 50: | transport system |
| 100: | monitoring system | 110: | filter |
| 120: | laser radiator | 130: | image sensor |
| 140: | processor | 20: | manufacturing component |
| 30: | detection information | | |

## Claims

1. A monitoring system comprising:
a filter configured to collect a foreign substance from a manufacturing component;
a laser radiator configured to radiate a visible light laser to the foreign substance collected on a surface of the filter;
an image sensor configured to generate a laser radiation image by photographing the foreign substance exposed to the visible light laser; and
a processor configured to acquire detection information of the foreign substance detected from the manufacturing component by performing image processing on the laser radiation image.

2. The monitoring system of claim 1, wherein the processor is configured to:
generate a noise processed image by performing noise processing on the laser radiation image; and
perform adaptive thresholding on the noise processed image to acquire the detection information.

3. The monitoring system of claim 2, wherein the processor is configured to:
partition the noise processed image into a plurality of blocks and calculate an adaptive threshold value of each block;
binarize brightness values of pixels of each block based on the adaptive threshold value and calculate binarized brightness values; and
acquire the detection information based on the binarized brightness values.

4. The monitoring system of claim 3, wherein the processor is configured to:
calculate a weighted average of the brightness values of the pixels of each block;
calculate a threshold value correction constant based on a difference between a maximum brightness value and a minimum brightness value of each block; and
calculate the adaptive threshold value by applying the threshold value correction constant to the weighted average.

5. The monitoring system of claim 4, wherein the processor is configured to:
determine the number of excluded pixels (m) based on a first quartile (Q1), a third quartile (Q3), and an interquartile range (IQR) of the brightness values of the pixels of each block; and
calculate the threshold value correction constant based on a difference between the maximum brightness value and the minimum brightness value with respect to the remaining pixels excluding m pixels with upper level brightness values and m pixels with lower level brightness values among the pixels of each block.

6. The monitoring system of claim 2, wherein the processor is configured to:
generate a first direction Sobel filter image and a second direction Sobel filter image by applying a Sobel filter in a first direction and a second direction perpendicular to the first direction with respect to the laser radiation image; and
generate the noise processed image by calculating an average of the first direction Sobel filter image and the second direction Sobel filter image.

7. The monitoring system of claim 1, wherein the detection information includes at least one of a detection amount and size of the foreign substance detected from the manufacturing component, and
the processor is further configured to predict a defect rate of the manufacturing component based on the detection information.

8. The monitoring system of claim 1, wherein the manufacturing component includes a battery electrode,
the foreign substance collected on a surface of the filter includes a metallic foreign substance,
the filter includes a magnetic bar filter configured to collect the metallic foreign substance, and
the visible light laser includes a green light line beam laser having a wavelength range including a wavelength of 532 nm.

9. An operating method of a monitoring system, comprising:
collecting a foreign substance from a manufacturing component through a filter;
radiating a visible light laser to the foreign substance collected on a surface of the filter through a laser radiator;
generating a laser radiation image by photographing the foreign substance exposed to the visible light laser through an image sensor; and
acquiring detection information of the foreign substance detected from the manufacturing component by performing image processing on the laser radiation image.

10. The operating method of claim 9, wherein the acquiring of the detection information includes:
generating a noise processed image by performing noise processing on the laser radiation image; and
performing adaptive thresholding on the noise processed image to acquire the detection information.

11. The operating method of claim 10, wherein the performing of the adaptive thresholding includes:
partitioning the noise processed image into a plurality of blocks and calculating an adaptive threshold value of each block;
binarizing brightness values of pixels of each block based on the adaptive threshold value and calculating binarized brightness values; and
acquiring the detection information based on the binarization brightness values.

12. The operating method of claim 11, wherein the calculating of the adaptive threshold value includes:
calculating a weighted average of the brightness values of the pixels of each block;
calculating a threshold value correction constant based on a difference between a maximum brightness value and a minimum brightness value of each block; and
calculating the adaptive threshold value by applying the threshold value correction constant to the weighted average.

13. The operating method of claim 12, wherein the calculating of the threshold value correction constant includes:
determining the number of excluded pixels (m) based on a first quartile (Q1), a third quartile (Q3), and an interquartile range (IQR) of the brightness values of the pixels of each block; and
calculating the threshold value correction constant based on a difference between the maximum brightness value and the minimum brightness value with respect to the remaining pixels excluding m pixels with upper level brightness values and m pixels with lower level brightness values among the pixels of each block.

14. The operating method of claim 10, wherein the generating of the noise processed image includes:
generating a first direction Sobel filter image and a second direction Sobel filter image by applying a Sobel filter in a first direction and a second direction perpendicular to the first direction with respect to the laser radiation image; and
generating the noise processed image by calculating an average of the first direction Sobel filter image and the second direction Sobel filter image.

15. The operating method of claim 9, wherein the detection information includes at least one of a detection amount and size of the foreign substance detected from the manufacturing component, and
the operating method further includes predicting a defect rate of the manufacturing component based on the detection information through the processor.

16. The operating method of claim 9, wherein the manufacturing component includes a battery electrode,
the foreign substance collected on a surface of the filter includes a metallic foreign substance,
the filter includes a magnetic bar filter configured to collect the metallic foreign substance, and
the visible light laser includes a green light line beam laser having a wavelength range including a wavelength of 532 nm.

17. A foreign substance filtering system comprising:
a transport system configured to transport a manufacturing component; and
a monitoring system configured to filter a foreign substance from the manufacturing component and monitor detection information of the foreign substance,
wherein the monitoring system includes:
a filter configured to collect the foreign substance from the manufacturing component;
a laser radiator configured to radiate a visible light laser to the foreign substance collected on a surface of the filter;
an image sensor configured to generate a laser radiation image by photographing the foreign substance exposed to the visible light laser; and
a processor configured to acquire detection information of the foreign substance detected from the manufacturing component by performing image processing on the laser radiation image.

18. The foreign substance filtering system of claim 17, wherein the processor is configured to:
generate a noise processed image by performing noise processing on the laser radiation image; and
perform adaptive thresholding on the noise processed image to acquire the detection information.

19. The foreign substance filtering system of claim 18, wherein the processor is configured to:
partition the noise processed image into a plurality of blocks and calculate an adaptive threshold value of each block;
binarize brightness values of pixels of each block based on the adaptive threshold value and calculate binarized brightness values; and
acquire the detection information based on the binarized brightness values.

20. The foreign substance filtering system of claim 17, wherein the processor is further configured to predict a defect rate of the manufacturing component based on the detection information.
